# DEMANDE DE BREVET EUROPEEN

(11) **EP 0 722 906 A1**
(43) Date de publication de la demande: **24.07.1996**
(21) Numéro de dépôt: 96400107.7
(22) Date de dépôt: 16.01.1996
(51) Int. Cl.: C02F 3/12, C02F 1/52

(54) **Procédé de déphosphatation amélioré des eaux résiduaires**

(30) Priorité: 20.01.1995 FR 9500640
(71) Demandeur: ELF ATOCHEM S.A., F-92800 Puteaux (FR)
(72) Inventeur: Boussely, Jean-François, F-93200 Saint Denis (FR); Dernat, Marin, F-92800 Puteaux (FR); Elmerich, Pierre, F-75008 Paris (FR)

(57) **Abrégé**

La présente invention concerne un procédé de déphosphatation amélioré des eaux résiduaires.

Ce procédé consiste à injecter simultanément un agent coagulant en amont et en aval d'une étape d'oxydation biologique en milieu aérobie.

## Description

La présente invention concerne un procédé d'élimination du phosphore des eaux résiduaires.

La présence de grandes quantités de composés du phosphore, en particulier d'orthophosphates dans les eaux d'égouts et autres eaux résiduaires, est partiellement responsable du phénomène appelé eutrophisation.

L'abondance excessive de phosphore entraîne un développement non maîtrisé d'algues et / ou de plantes qui se produit dans les lacs et les cours d'eau et modifie considérablement les caractéristiques biologiques et physico-chimiques de ces eaux, rendant plus difficile les traitements de potabilisation.

Afin d'obtenir des teneurs en phosphore répondant aux normes actuelles, les eaux résiduaires urbaines et / ou industrielles déversées dans lesdits milieux doivent faire l'objet de traitements spécifiques communément nommés déphosphatation.

Le phosphore est le plus souvent éliminé desdites eaux résiduaires par un traitement biologique, ou bien par un traitement physico-chimique ou encore par une combinaison de ces deux traitements.

La déphosphatation biologique est basée sur l'alternance des séquences aérobie/anaérobie pour modifier l'équilibre enzymatique qui régule la synthèse des polyphosphates par des micro-organismes. On accumule ainsi le phosphore dans des matières solides.

Pour être dans des conditions favorables de déphosphatation biologique, il est nécessaire d'avoir un apport important en charges organiques biodégradables.

La DCO (Demande Chimique en Oxygène) est un paramètre important vis-à-vis du NTK (Azote total organique et ammoniacal).

Le rapport DCO/NTK doit être au moins égal à 7,5 si l'on veut une dénitrification complète pour ne pas perturber la déphosphatation. Plus le rapport DCO/P sera élevé, plus l'élimination sera importante.

Ce procédé présente de nombreux avantages. Notamment, il ne nécessite pas d'adjonction de réactif complémentaire. Il produit peu de boues supplémentaires et entraîne une élimination partielle de l'azote.

Cependant, il présente l'inconvénient d'avoir un rendement d'élimination du phosphore qui dépend de la température extérieure, de la charge en DCO et de la régularité des débits. Dans la plupart des cas, le rendement ne dépasse pas 60 %.

La déphosphatation physico-chimique consiste à éliminer le phosphore avec des ions des métaux comme le fer ou l'aluminium.

Ce traitement constitue le procédé à part entière d'une station biologique classique ou complète une déphosphatation biologique.

Dans le cas du traitement classique des eaux résiduaires urbaines, une installation peut comprendre divers traitements qui se justifient selon la composition de l'eau à traiter et les objectifs fixés par la législation.

On peut rencontrer généralement des traitements mécaniques tels que le dégrillage, le dessablage, le déshuilage ; une étape de décantation primaire ; une étape de déphosphatation biologique ; une étape d'aération dans un bassin dit bassin à "boues activées" et une décantation secondaire.

Les "boues activées" sont généralement constituées de micro-organismes et de bactéries qui, en milieu aérobie, détruisent la pollution carbonée.

Les performances de cette installation peuvent être améliorées par des traitements tertiaires tels que filtration et/ou désinfection.

En l'absence de coagulants, la décantation primaire permet d'éliminer entre 5 et 15 % de phosphore. Il s'agit essentiellement de phosphore particulaire qui précipite naturellement à cette étape. La présence de ce phosphore particulaire dépend de facteurs tels que la dureté calcique (précipitation de Ca₃(PO₄)₂), le pH, la température, la concentration, la nature du phosphore...

Lors de l'élimination de la charge organique, la croissance des organismes bactériens qui constituent les boues activées nécessite la présence d'éléments minéraux indispensables tels que l'azote (7 à 10 %) et le phosphore (2 à 3 %). On retient en général une consommation d'un gramme de phosphore pour 100 grammes de DB05 (demande biologique en oxygène après 5 jours d'incubation) éliminée.

La déphosphatation biologique se produit lorsque les boues activées sont privées d'aération pendant un certain temps. On observe successivement un relargage du phosphore dans la phase liquide au cours de la période d'anaérobiose puis une "hyper-absorption" par les boues lorsqu'elles sont de nouveau aérées. La teneur en phosphore dans la boue peut atteindre 6,5 % voire 7 % par rapport à la matière sèche. La déphosphatation biologique a besoin d'une source non négligeable en carbone, c'est la raison pour laquelle sur des eaux résiduaires, le rendement d'élimination en phosphore total se situe entre 40 % et 70 %.

Ce rendement est très insuffisant et cette façon d'opérer ne permet pas par conséquent d'atteindre l'objectif fixé par les diverses contraintes législatives qui préconisent des teneurs en phosphore dans les rejets de plus en plus faibles. En particulier, la directive CEE 91/271 du 21 mai 1991 et le décret français du 3 juin 1994 préconisent un rendement d'élimination du phosphore supérieur à 80 % et une teneur résiduelle en phosphore inférieure à 1 mg/l.

Afin de parfaire l'élimination biologique du phosphore dans les eaux résiduaires, on utilise complémentairement des réactifs de coagulation communément désignés par coagulants, à base de sels des métaux de fer et/ou d'aluminium ou de sels des métaux alcalino-terreux.

Pour les stations dites biologiques, la performance de la déphosphatation physico-chimique est étroitement liée au choix du point d'injection desdits coagulants.

Ainsi, l'injection des coagulants dans le décanteur primaire (pré-précipitation) permet d'éliminer environ 80 % du phosphore et, complémentairement soulage le traitement biologique. Cependant, il est difficile de maîtriser la concentration en réactif et dans bien des cas, il est nécessaire de surdoser, ce qui présente l'inconvénient d'augmenter le volume des boues et peut perturber le traitement biologique.

L'injection des coagulants après la clarification (post-précipitation ou traitement tertiaire) permet d'effectuer une économie sur la quantité de réactif. Dans ce cas, il est nécessaire d'éliminer le phosphate précipité par une clarification tertiaire. Cette façon d'opérer entraîne un investissement important, rédhibitoire pour le développement d'une installation de grande capacité.

L'injection des coagulants dans le bassin d'aération (co-précipitation) bien que constituant le meilleur compromis investissement - consommation de coagulants ne permet pas cependant de respecter les valeurs de la directive CEE 91/271 du 21 mai 1991 et du décret français du 3 juin 1994.

On a maintenant trouvé un procédé de déphosphatation des eaux résiduaires comprenant les étapes successives de prétraitements mécaniques (1), d'oxydation biologique en milieu aérobie (2) et de clarification (3), caractérisé en ce que l'on injecte simultanément au moins un agent coagulant en amont et en aval de l'étape d'oxydation biologique en milieu aérobie (2).

Le procédé selon la présente invention peut comporter en outre des étapes supplémentaires telles qu'une étape de décantation primaire (4) et une étape de déphosphatation biologique en milieu anaérobie (5).

L'étape de décantation primaire se situe généralement après l'étape de pré-traitements mécaniques (1) et avant l'étape de déphosphatation biologique (5). Cette dernière se situant avant l'étape d'oxydation biologique (2).

Dans ces configurations, l'injection de coagulant amont se situe après l'étape de décantation primaire (4) et / ou l'étape de déphosphatation biologique (5).

Les figures (I) à (IV) reportées dans la planche 1 représentent des configurations possibles et non limitatives du procédé selon l'invention.

Dans la planche 1, (1) représente l'étape de prétraitements mécaniques, (2) l'étape d'oxydation biologique en milieu aérobie, (3) l'étape de clarification, (4) l'étape de décantation primaire, (5) l'étape de déphosphatation biologique en milieu aérobie, la flèche ⇒ indique les points d'injection de coagulant, la lettre (U) désigne l'injection effectuée en amont de (2), la lettre (D) désigne l'injection effectuée en aval de (2), la lettre (E) désigne l'entrée des eaux brutes à traiter et la lettre (S) désigne la sortie des eaux traitées.

Selon la présente invention, l'étape de prétraitements mécaniques (1) peut comprendre diverses opérations telles que le dégrillage, le dessablage, le déshuilage...

Les agents coagulants utilisables selon la présente invention, sont choisis parmi les sels des métaux de fer et/ou d'aluminium ou les sels des métaux alcalino-terreux.

A titre d'illustration de tels sels, on citera le chlorure ferrique FeCl₃ ; le sulfate ferrique ; le sulfate d'aluminium Al₂ (SO₄)₃, xH₂O ; le chlorure d'aluminium AlCl₃ ; les polychlorures d'aluminium de formule générale : Alₙ(OH)ₘ Cl₃ₙ₋ₘ dans laquelle n est quelconque, 3n-m est positif, m et n étant des nombres entiers positifs, ledit polychlorure d'aluminium pouvant contenir en outre un anion polyvalent Y choisi parmi les anions des acides sulfurique, phosphorique, polyphosphorique, silicique, carboxylique et sulfurique, le rapport molaire Y/Al étant de préférence, compris entre 0,015 et 0,4 ; les polychlorures de fer, les polychlorures mixtes de fer et d'aluminium, les chlorosulfates de fer et le chlorure de calcium.

Selon la présente invention, on peut utiliser un mélange d'au moins deux des sels métalliques mentionnés ci-dessus.

On ne sortirait pas du cadre de l'invention si l'on ajoutait aux sels métalliques précédemments mentionnés des polymères organiques tels que les polyacrylamides.

L'invention s'applique tout particulièrement à l'utilisation du chlorure d'aluminium AlCl₃.

Selon la présente invention, l'agent coagulant est généralement injecté sous forme d'une solution aqueuse.

Le pourcentage pondéral d'agent coagulant respectivement et simultanément introduit en amont et en aval de l'étape d'oxydation biologique (2) est compris, pour l'injection amont, entre 90 % et 10 % et, de préférence, entre 80 % et 20 % de la quantité totale à injecter, et, pour l'injection aval, entre 10 % et 90 % et, de préférence entre 20 % et 80 % de la quantité totale à injecter.

Le rapport molaire Me/Phosphore à éliminer (ci-après Me/P), dans lequel Me désigne le (ou les) métal (métaux) du (des) sel(s) utilisé(s) comme agent coagulant, peut soit varier avec le taux de phosphore des eaux brutes, soit rester constant lorsque l'introduction du coagulant est asservi au taux de phosphore. Il est généralement compris entre 0,1 et 1,5 et, de préférence entre 0,2 et 0,8. Une valeur faible de ce rapport traduit une consommation faible d'agent coagulant.

Le procédé selon la présente invention permet notamment d'obtenir une teneur en phosphore dans les eaux traitées inférieure à 1 mg/l.

On constate également au cours du temps une régularité de cette teneur en phosphore dans les eaux de sortie de station. En effet, on observe que très rarement des "pointes" supérieures à 1 mg/l. On contribue ainsi à la fiabilisation de l'installation de déphosphatation des eaux résiduaires.

Par ailleurs, pour un rapport molaire Me/P identique, on constate que le procédé selon la présente invention, procédé que l'on peut désigner comme procédé double injection, permet d'obtenir un pourcentage d'élimination du phosphore élevé et supérieur à un quelconque procédé dit monoinjection.

Ce pourcentage d'élimination du phosphore atteint 90 % voire 95 % et plus.

Ceci présente l'avantage de pouvoir diminuer les quantités de coagulant à utiliser et, par voie de conséquence, entraîne une diminution du volume des boues.

L'exemple qui suit illustre l'invention.

### EXEMPLE

Les essais ci-après ont été réalisés dans une station biologique ayant une capacité de traitement de 100 000 eq/habitant et présentant la configuration de la figure (III) de la planche 1.

Dans cette station, les eaux résiduaires subissent une étape de prétraitements mécaniques (1) (dessablage, dégrillage, déshuilage) puis sont ensuite acheminées vers un bassin dit "anaérobie" dans lequel on effectue l'étape de déphosphatation biologique (5). La digestion anaérobie est caractérisée par une activité bactérienne spécifique se développant en absence d'oxygène et à une température voisine de 25° C.

Ensuite les eaux sont introduites dans un bassin dit "aérobie" dans lequel on effectue l'étape d'oxydation biologique (2).

Ce bassin est dit bassin aux "boues activées".

Ensuite l'effluent est acheminé vers des clarificateurs pour y subir l'étape de clarification (3).

Dans les clarificateurs, l'effluent est séparé de ces boues en suspension.

L'eau surnageante constitue l'eau de sortie station (S). Les boues décantées sont reprises et acheminées vers un épaississeur (non représenté sur la figure (III) de la planche 1) dans lequel on extrait une quantité maximale d'eau qui peut être recyclée. Les boues épaissies sont déshydratées puis valorisées, notamment dans l'agriculture. On désigne par la suite par :
◆ Injection anaérobie : l'injection (U) d'agent coagulant effectuée en amont du bassin "aérobie" où l'on effectue l'étape d'oxydation biologique (2),
◆ Injection aérobie : l'injection (D) d'agent coagulant effectuée en aval du bassin "aérobie" où l'on effectue l'étape d'oxydation biologique (2), et par
◆ double injection, l'injection simultanée d'agent coagulant effectuée en amont (U) et en aval (D) dudit bassin "aérobie" où l'on effectue l'étape d'oxydation biologique (2).

### Conditions des essais

On utilise comme agent coagulant une solution aqueuse de chlorure d'aluminium AlCl₃ ayant une teneur pondérale en AlCl₃ égale à 26 %.

Par la suite, on exprimera les quantités d'agent coagulant introduit en gramme de la solution aqueuse d'AlCl₃ à 26 % par m³ d'eaux à traiter.
Les essais d'élimination du phosphore se sont déroulés au cours des trois périodes successives suivantes :
◆ au cours d'une première période d'essais (A) de 30 jours, nous avons effectué une seule injection d'une solution aqueuse d'AlCl₃ à la sortie du bassin anaérobie, en amont de (2), injection dite "injection anaérobie",
◆ au cours d'une seconde période d'essais, (B) de 23 jours, nous avons effectué deux injections simultanées d'une solution aqueuse d'AlCl₃, l'injection amont (U) représente 80 % en poids et l'injection aval (D) représente 20 % en poids de la quantité totale injectée, ces injections sont désignées "double injection",
◆ au cours d'une troisième période d'essais (C) de 38 jours, nous avons effectué une seule injection d'une solution aqueuse d'AlCl₃ à la sortie du bassin aérobie, c'est à dire en aval de (2) ; injection dite "injection aérobie".
Au cours de ces trois périodes (A), (B) et (C) les quantités de la solution aqueuse d'AlCl₃ injectées sont les suivantes :
◆ pour la période (A) : 63 g/m³,
◆ pour la période (B) : 63 g/m³ répartis comme ci-après :
   ∗ 49 g/m³ pour l'injection anaérobie (U) soit 80 % de la quantité totale,
   ∗ 14 g/m³ pour l'injection aérobie (D), soit 20 % de la quantité totale,
◆ pour la période (C) : 52 g/m³.

### Analyses

Les analyses du phosphore ont été réalisées sur l'eau brute (E) et sur l'eau de sortie de la station (S). En plus de la détermination totale du phosphore, nous avons contrôlé les paramètres suivants :
◆ le pH,
◆ les matières en suspension (MeS) et,
◆ la demande chimique en oxygène (DCO).
Les analyses ont été effectuées sur des échantillons moyens journaliers.
Les caractéristiques des eaux brutes à traiter entrant dans la station (E) sur la figure (III) de la planche 1 sont reportées dans le tableau 1.

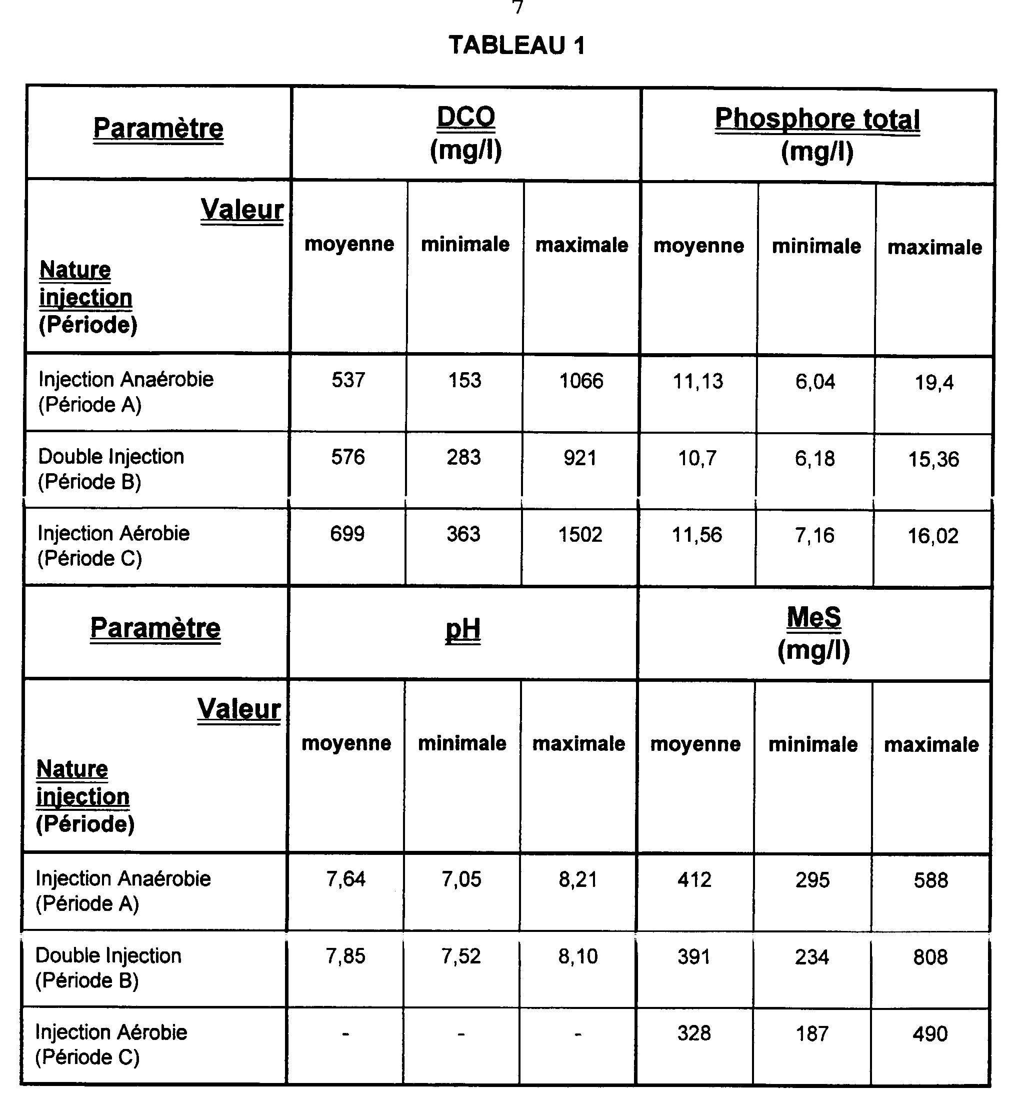

On constate que les écarts entre les valeurs maximales et minimales de la teneur en phosphore total sont importants. Cependant les valeurs moyennes des trois périodes sont très proches concernant la DCO et les MeS. Par contre, si l'on compare les moyennes entre chaque période, les différences sont faibles. Quant au pH, on observe peu de différence entre les périodes. Par contre, l'écart est relativement important entre les minimums et les maximums pour chaque période.

Dans le tableau 2, nous avons reporté la teneur en phosphore dans les eaux brutes à traiter entrant dans la station et dans eaux de sortie de station (S) traitées selon le procédé double injection de la présente invention et selon un procédé monoinjection anaérobie et un procédé monoinjection aérobie.

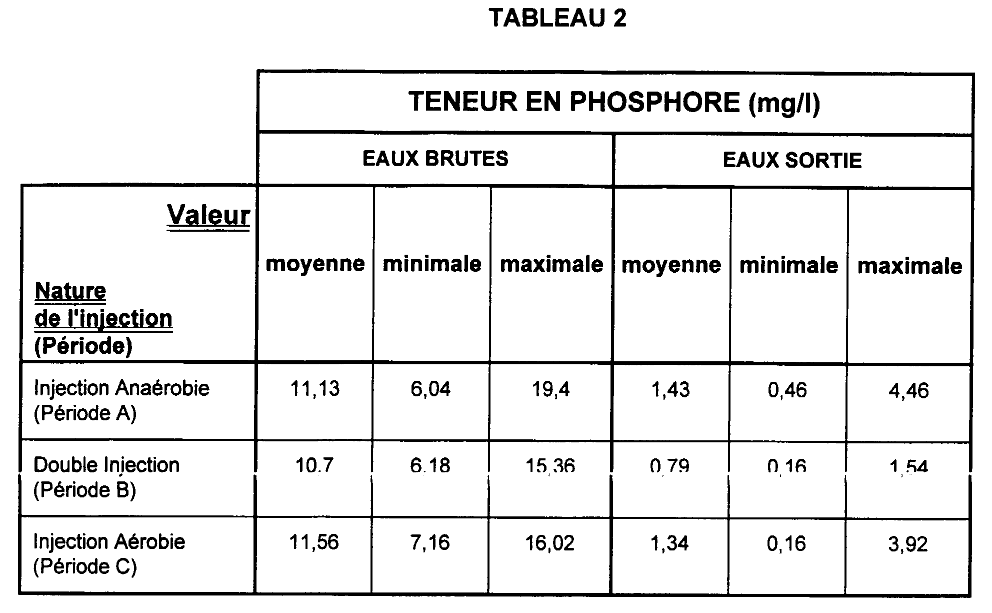

On constate que la double injection, injection simultanée de coagulant en amont et en aval de (2) permet d'obtenir une teneur en phosphore résiduel très inférieure à 1 mg/l.

De plus les résultats sont beaucoup plus réguliers et les "pointes" en phosphore résiduel sont beaucoup plus faibles. Ceci est visualisé sur le graphique unique de la planche 2 qui représente le taux de phosphore journalier sortie de station.

Sur ce graphique, P désigne la teneur en phosphore en mg/l sortie de station, J le nombre de jours pour chaque période, _____ x _____ représente l'injection anaérobie (période A), _____ · _____ représente la double injection (période B) et ----------- ◇ ------------ représente l'injection aérobie (période C).

Dans le tableau 3 nous avons reporté le rapport molaire Al/P et le rendement d'élimination du phosphore pour un procédé monoinjection : injection anaérobie, et pour le procédé selon la présente invention : double injection.

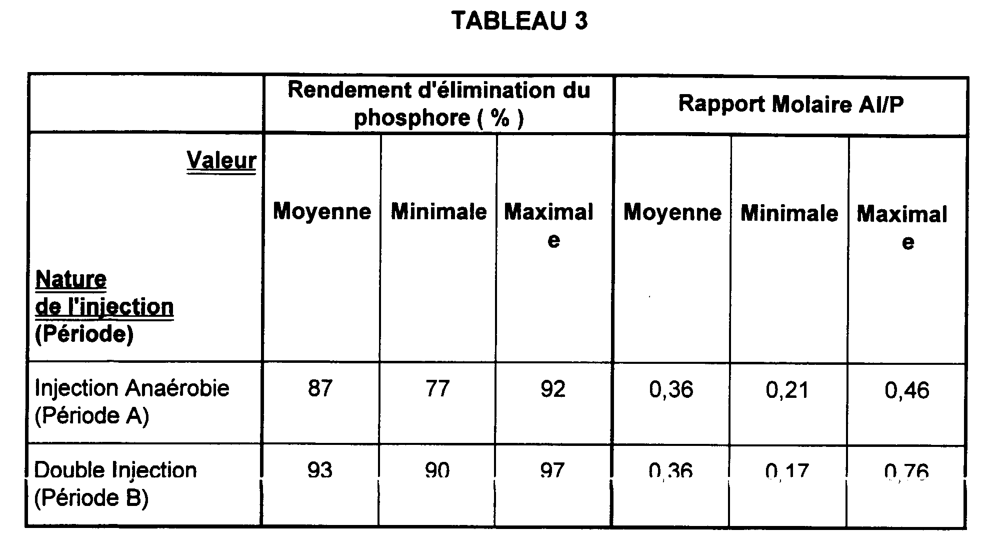

On constate que pour un même rapport molaire Al/P, qui est égal à 0,36, on obtient avec le procédé double-injection selon la présente invention un rendement d'élimination du phosphore élevé. Ce rendement est égal à 93 % et est très supérieur au rendement de 87 % obtenu avec le procédé monoinjection anaérobie.

Dans les tableaux 4 et 5 nous avons respectivement reporté la demande chimique en oxygène (DCO) et la teneur en matières en suspension (MeS) pour les eaux brutes à traiter entrant dans la station et pour les eaux sortie de station traitées selon le procédé double injection de la présente invention et selon les procédés monoinjection anaérobie et aérobie

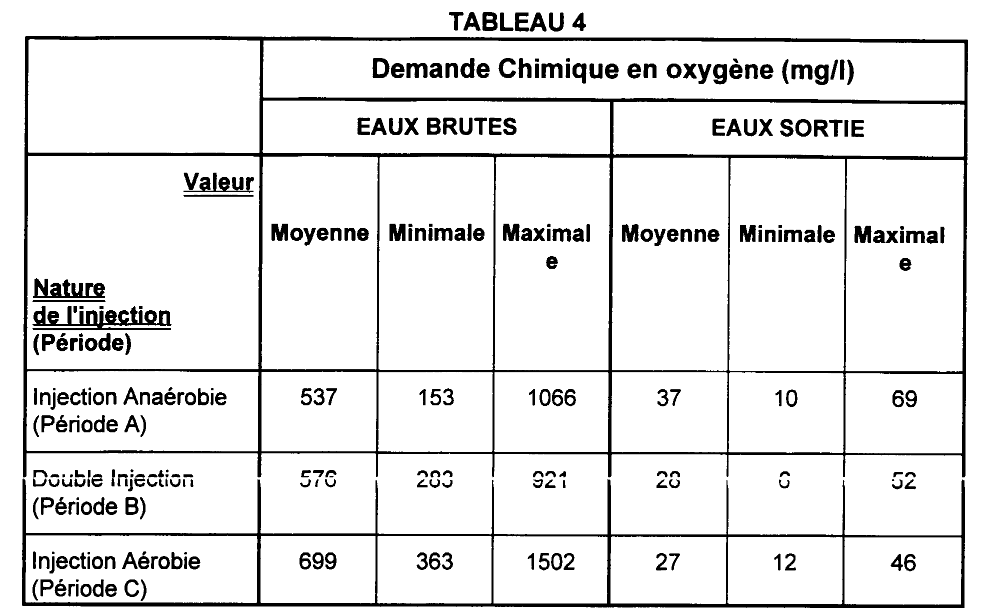

On ne constate pas d'abattement de la DCO (tableau 4) entre l'injection aérobie et la double injection. Par contre on observe des résultats moins bons dans le cas de l'injection anaérobie.

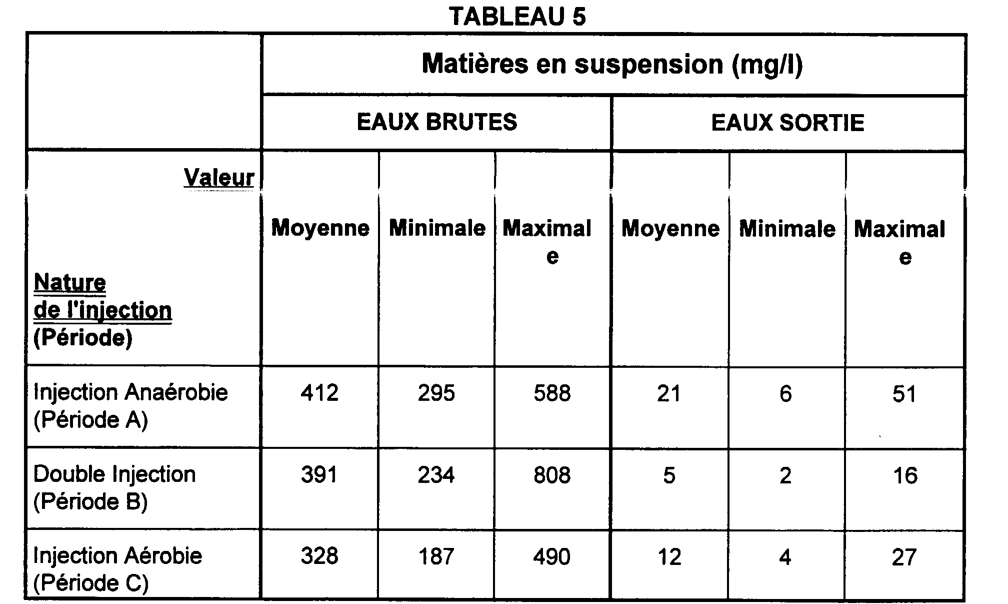

La double injection permet d'obtenir une teneur en MeS (tableau 5) très faible.

## Revendications

1. Procédé de déphosphatation des eaux résiduaires comprenant les étapes successives de prétraitements mécaniques (1), d'oxydation biologique en milieu aérobie (2) et de clarification (3), caractérisé en ce que l'on injecte simultanément au moins un agent coagulant en amont et en aval de l'étape d'oxydation biologique en milieu aérobie (2).

2. Procédé selon la revendication 1, caractérisé en ce qu'il comprend en outre une étape de déphosphatation biologique en milieu anaérobie (5) située avant l'étape d'oxydation biologique en milieu aérobie (2).

3. Procédé selon la revendication 2, caractérisé en ce qu'il comprend en outre une étape de décantation primaire (4) située après l'étape de pré-traitements mécaniques (1) et avant l'étape de déphosphatation biologique en milieu anaérobie (5).

4. Procédé selon l'une des revendications 1 à 3, caractérisé en ce que l'injection de coagulant amont se situe après l'étape de décantation primaire (4) et / ou l'étape de déphosphatation biologique en milieu anaérobie (5).

5. Procédé selon l'une des revendications 1 à 4, caractérisé en ce que l'agent coagulant est choisi parmi les sels des métaux de fer et / ou d'aluminium ou les sels des métaux alcalino-terreux.

6. Procédé selon la revendication 5, caractérisé en ce que les agents coagulants sont le chlorure ferrique FeCl₃, le sulfate ferrique ; le chlorure d'aluminium AlCl₃, le sulfate d'aluminium, les polychlorures d'aluminium, les polychlorures mixtes de fer et d'aluminium, les polychlorures de fer et le chlorure de calcium.

7. Procédé selon l'une des revendications 5 ou 6, caractérisé en ce que l'aqent coagulant est le chlorure aluminium AlCl₃.

8. Procédé selon l'une des revendications 5 à 7, caractérisé en ce que l'agent coagulant est sous forme de solution aqueuse.

9. Procédé selon l'une des revendications 1 à 8, caractérisé en ce que le pourcentage pondéral d'agent coagulant respectivement et simultanément introduit en amont et en aval de l'étape d'oxydation biologique (2) est compris, pour l'injection amont, entre 90 % et 10 % et, de préférence, entre 80 % et 20 % de la quantité totale à injecter, et pour l'injection aval entre 10 % et 90 % et, de préférence entre 20 % et 80 % de la quantité totale à injecter.

10. Procédé selon l'une des revendications 1 à 9, caractérisé en ce que le rapport molaire Me/P dans lequel Me représente le métal du sel métallique et P le phosphore à éliminer est compris entre 0,1 et 1,5 et, de préférence entre 0,2 et 0,8.
